Europäisches Patentamt

European Patent Office

Office européen des brevets

(11) Veröffentlichungsnummer: **0 263 952 B1**

# (12) EUROPÄISCHE PATENTSCHRIFT

(45) Veröffentlichungstag der Patentschrift: **23.12.92**

(21) Anmeldenummer: **87112607.4**

(22) Anmeldetag: **29.08.87**

(51) Int. Cl.⁵: **B25J 9/18**, B25J 19/02

---

(54) **Roboteranlage mit beweglichen Manipulatoren.**

---

(30) Priorität: **15.10.86 DE 3635076**

(43) Veröffentlichungstag der Anmeldung:
**20.04.88 Patentblatt 88/16**

(45) Bekanntmachung des Hinweises auf die
Patenterteilung:
**23.12.92 Patentblatt 92/52**

(84) Benannte Vertragsstaaten:
**AT CH DE FR GB IT LI SE**

(56) Entgegenhaltungen:
**EP-A- 0 108 549**
**EP-A- 0 152 594**

**COMPUTER. vol. 15, no. 6, Juni 1982, LONG
BEACH US Seiten 8 - 24; JARVIS R.A.: "A
Computer Vision and Robotics Laboratory "**

**TECHNISCHE RUNDSCHAU, no. 17, April
1986, BERN, CH, Seiten 98-103; LEVI Paul &
VAJTA Laszlo: "Kombiniertes
Kamera/Laser-Sensorsystem für Roboter"**

**Proceedings of the IEEE International Conference on Robotics & Automation, vol. 3,
2986, Los Angeles, US, Seiten 1992-2001;
HIRZINGER G. & DIETRICH J: "Multysensory
Robots and Sensorbased Path Generation"**

(73) Patentinhaber: **MERCEDES-BENZ AG
Mercedesstrasse 136
W-7000 Stuttgart 60(DE)**

(72) Erfinder: **Sepp, Gunther, Dr.
Hermann-Löns-Strasse 10
W-8012 Ottobrun(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Roboteranlage mit einem oder mehreren beweglichen Manipulatorarmen gemäß dem Gattungsbegriff des Anspruches 1.

Durch den Artikel "Robotics Laboratory" von A. Jarvis in der Zeitschrift "Computer" Juni 1982 ist eine Ausführungsform gemäß dem Gattungsbegriff des Anspruches 1 bekanntgeworden. Allerdings handelt es sich hier um das sehr aufwendige "Range-based scene-segmentation-Verfahren", das sehr komplizierte Algorithmen verwendet.

Durch den Artikel "Kombiniertes Kamera/Laser-Sensorsystem für Roboter" in der "Technischen Rundschau" 78 (1986) April. No. 17, werden Maßnahmen zur Erzeugung eines 3D-Bildes angegeben, aus dem die Information über den zu ortenden Gegenstand entnommen werden, wenn das 3D-Bild gut ist. Ist dies nicht der Fall, dann soll das 2D-Bild herangezogen werden. Hier ist generell ein großes Gesichtsfeld erforderlich und gegeben, jedoch die räumliche Auflösung nicht ausreichend.

Der konstruktive Aufbau der Anlagen nach dem Stand der Technik ist um ein vielfaches zu hoch und überdimensioniert. Der Funktionsablauf ist ebenfalls zu aufwendig. Die Bildkorrelation erfordert viele Rechenabläufe bis die "beste" Vergrößerung aus der aus Gründen der Rechenökonomie diskreten Menge aller möglicher Vergrößerungen des Referenzobjektes sowie dessen genaue Lage innerhalb des TV-Bildes gefunden ist. Um dieses zu vermeiden, muß die Beobachtungssituation wieder stark eingeschränkt und vorbestimmt werden, indem z.B. das zu erkennende Objekt das Gesichtsfeld der TV-Kamera in definiertem Abstand und in hinreichend definierter Richtung, z.B. auf einem Förderband passiert.

Weiterhin wird der größtmögliche Spitzenwert der Korrelationsfunktion nur zufällig erreicht, nämlich dann, wenn einmal die beste Vergrößerung, d.h. diejenige beim Korrelationsmaximum zufällig mit der (festen) Kameravergrößerung übereinstimmt und zum andernmal die Entfernung des Objektes zufällig gerade so groß und die Blickrichtung derart ist, daß die Objektkonturen optimal mit dem Bildpunktraster der digitalisierten Szene übereinstimmen. Weiterhin ist erforderlich, daß die Objektentfernung im Tiefenschärfenbereich des Kameraobjektivs liegt.

Der vorliegenden Erfindung liegt die Aufgabe zugrunde, die Nachteile des aufgezeigten Standes der Technik zu beseitigen und eine Roboteranlage zu schaffen, die mit geringem Rechenaufwand und einer CCD-Kamera mit vergleichsweise wenigen Bildelementen die Mustererkennung durchführen, und keine Maßstabstransformationen mehr durchgeführt werden müssen.

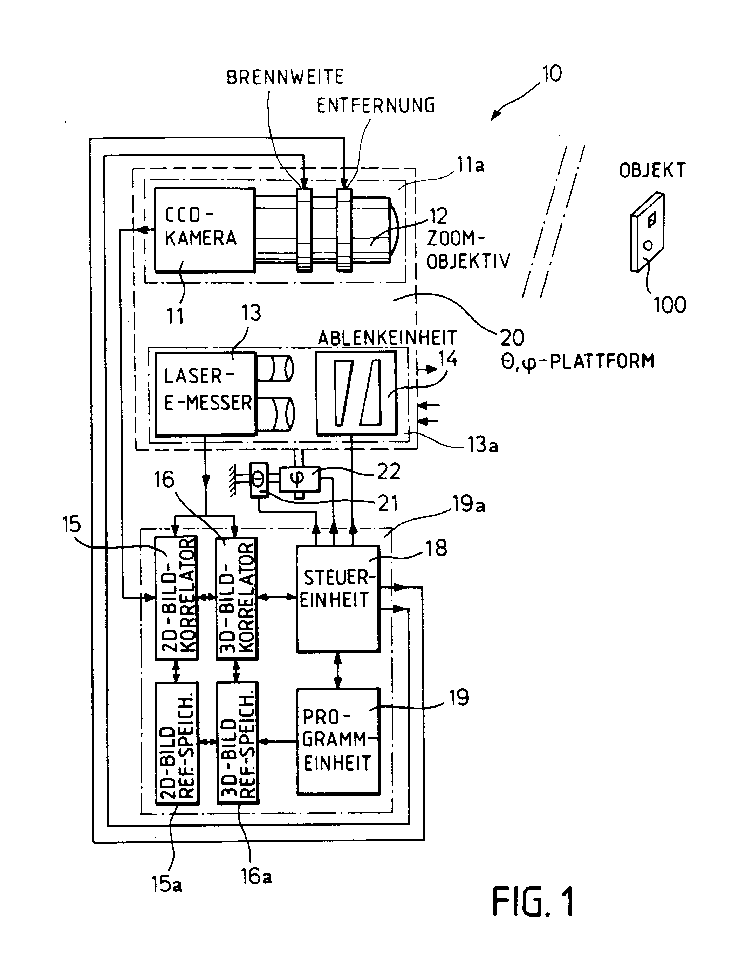

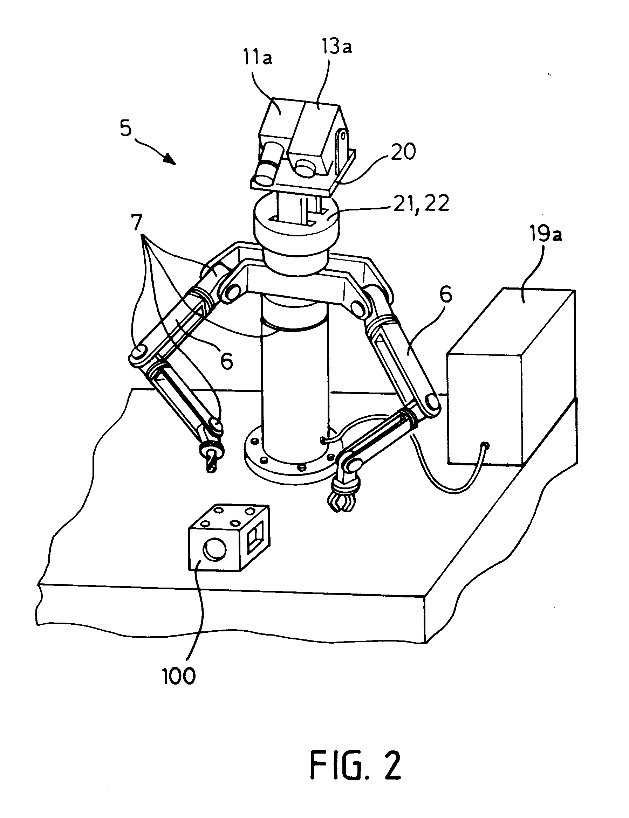

Diese Aufgabe wird durch die im Anspruch 1 aufgeführten Maßnahmen gelöst. In den Unteransprüchen sind weitere Ausgestaltungen aufgezeigt und in der nachfolgenden Beschreibung ist ein Ausführungbeispiel erläutert. In den beiden Figuren der Zeichnung sind das Blockschaltbild (Fig. 1) der vorgeschlagenen Bildverarbeitungsanlage sowie eine schematische Darstellung der Roboteranlage gezeigt (Fig.2).

Der allgemeine Erfindungsgedanke beruht darauf, daß mittels einer CCD-Kamera mit Zoomobjektiv, einem Laserradar und einer Auswerte- und Steueranlage eine stark vereinfachte Mustererkennung ermöglicht wird, die deshalb in weitesten Umfang auf alle beteiligen Objekte einschließlich der gerade manipulierten anwendbar ist, wodurch die Möglichkeit geschaffen wird, die Roboteranlage mit flexiblen Manipulatorarmen in Leichtbauweise und einfachster Sensorik zur Lage- und Bewegungskontrolle auszuführen. Hierbei entspricht in einer Analogie der flexible Manipulator mit seinen einfachen und in großen Toleranzen messenden Lage- und Bewegungssensoren dem menschlichen Arm. Die zwei- und dreidimensionale Sensorik (TV und Laserradar) entspricht hier den menschlichen Augen, und die Auswerte- und Steueranlage entspricht dem menschlichen Gehirn.

In derselben Analogie ist es den flexiblen Manipulatoren möglich, Werkstücke bzw. Objekte von nahezu beliebiger Masse genau und kontrolliert zu handhaben, solange ihre mechanische Stabilität hierzu überhaupt in der Lage ist. Lastabhängige Deformationen des Manipulatorarmes werden wie beim menschlichen Arm dadurch kompensiert, daß Manipulator und Werkstück von der Sensorik genau kontrolliert und gesteuert werden. Die im flexiblen Manipulatorarm angeordnete rudimentäre Sensorik dient - wie beim menschlichen Arm äquivalent - nur zu einer zusätzlichen Grobinformation.

Die Roboteranlage 5 wird mit einer 3D-Sensorik 13a versehen, die ein dreidimensionales Abbild der Umwelt aufnimmt. Im vorgeschlagenen Ausführungbeispiel wird hierzu ein Laserradar LR eingesetzt, dem zusätzlich nun noch eine 2D-Sensorik 11a zur zweidimensionalen Informationsaufnahme zugeordnet ist. Beide Anordnungen bilden mit einer Plattform 20 und einer, die Informationen auswertenden Auswerte- und Steueranlage 19a die Bildaufnahme- und -verarbeitungsanlage 10. Diese Anlage 10 setzt sich im einzelnen aus einer CCD-Kamera 11, die mit einer als Zoomobjektiv 12 ausgebildeten Aufnahmeoptik versehen ist, einer steuerbaren Plattform 20 mit Antriebseinheiten 21 und 22 und Bildkorrelatoren 15, 16 mit Referenzbildspeichern 15a, 16a für die 2D- bzw. 3D-Bildverarbeitung zusammen. Weiterhin ist auf der Plattform 20 ein aus einem Laserentfernungsmesser 13 und einer Ablenkeinheit 14 bestehendes Laserradar LR angeordnet. Die Einrichtungen dieser Plattform 20 sowie diese selbst werden von einer Steuereinheit 18 beaufschlagt, die die 2D- und 3D-Sensoriken von 11a und 13a auf das vermutete Objekt 100 ausrichtet. Die Informationen zu dieser ersten Grobausrichtung werden der Programm- und Dateneinheit 19 entnommen, in welcher die notwendigen Kenntnisse der Roboteranlage, d.h. die ungefähre Lage und die Eigenschaften aller beteiligten Objekte, die Bearbeitungsaufgabe sowie mittels der Einfach-Sensorik 7 zur Lage- und Bewegungskontrolle der Zustand der Manipulatorarme 6 verfügbar sind.

Gegebenenfalls können solche Vorinformationen auch aufgrund einer vorläufigen, stark vereinfachten Aufnahme und Verarbeitung von 2D- bzw. 3D-Bildern gewonnen werden.

Bekanntermaßen sind 3D-Bilder sehr viel einfacher auszuwerten als 2D-Bilder, da die den Bildpunkten zugeordnete dritte Dimension, die Entfernung zu den Flächen des Objektes und damit dessen räumliche Ausdehnung, eindeutig gemessene Größen sind. Im Gegensatz dazu ist bei einem 2D-Bild der den Bildpunkten zugeordnete Grauwert ein je nach Beleuchtung, Blickwinkel, Entfernung und Oberflächenbeschaffenheit variable, d.h. nicht eindeutige Größe.

Vor der eigentlichen Bildkorrelation werden daher zumeist die Begrenzungslinien der Flächen gleicher Grauwerte, d.h. in der Regel die Kanten des Objektes in einem zusätzlichen Rechenabschnitt bestimmt; die Korrelation wird dann nur bezüglich dieser Kantenlinien durchgeführt.

Zudem kann die räumliche Ausdehnung, d.h. Größe des Objekts nicht unmittelbar dem 2D-Bild entnommen, sondern erst nach der erfolgreichen Korrelation abgeleitet werden.

Der Aufwand zur Mustererkennung mittels Korrelation zwischen Objektbild und einer Datenbank von Referenzbildern des Objektes in den verschiedenen vorkommenden Ansichten ist daher bei 2D-Bildern wesentlich höher als bei 3D-Bildern. So muß beispielsweise bei der 2D-Bildkorrelation die Referenzbildgröße nacheinander einer Reihe von Maßstabstransformationen unterworfen werden, bis die entfernungsabhängige, scheinbare Göße des Objektes derjenigen des Referenzobjektes entspricht, so daß die Korrelationsfunktion ein Maximum ergibt. Bei der aus Gründen der Rechenzeit notwendigerweise nur endlichen Zahl von diskreten Vergrößerungsschnitten wird überdies der größtmögliche Spitzenwert der Korrelationsfunktion nur zufällig erreicht, nämlich dann, wenn

a) die "beste" Vergrößerung, d.h. diejenige beim Korrelationsmaximum, zufällig der (festen) Kamera-Ver-größerung entspricht, mit welcher das 2D-Bild aufgenommen wurde, und
b) die Blickrichtung bei der die Bildaufnahme derart ist, daß die Objektkonturen optimal mit dem Bildpunktraster übereinstimmen. Selbstverständlich muß auch die Objektentfernung im Tiefenschärfenbereich des Kameraobjektivs liegen.

Nach der ersten Grobausrichtung der 2D- und 3D-Sensoriken 11a, 13a wird daher erfindungsgemäß das jeweilige Objekt zunächst mit dem Laserradar LR vermessen. Als Laserentfernungsmesser 13 kann hierbei vorteilhaft ein nach dem Phasenmeßverfahren arbeitendes System mit Halbleiterlaser und einer Entfernungsgenauigkeit der Größenordnung 1 bis 10 mm verwendet werden. Das Suchgesichtsfeld sowie die Bildauflösung in Azimuth $\Theta$ und Elevation $\phi$ wird durch die Programm- und Dateneinheit 19 über die Steuereinheit 18 und die Ablenkeinheit 14 den jeweiligen Erfordernissen angepaßt. Die nachfolgende Korrelationsrechnung zwischen dem 3D-Bild und den entsprechenden 3D-Referenzbildern ist nach den obigen Ausführungen vergleichsweise einfach und daher schnell und identifiziert das vermessene Objekt und seine spezielle Lage im Raum.

In der Praxis genügt in vielen Fällen die mit einem Laserradar mögliche Bildauflösung nicht zur vollen Identifizierung. Ist beispielsweise das Objekt ein Würfel mit verschiedenen feinen Bohrungen auf den verschiedenen Flächen, so lassen sich diese Bohrungen - und damit die gesuchte, eindeutige Orientierung des Objekts im Raum - nur durch eine 2D-Bildkorrelation mit der gegenüber dem Laserradarbild immer deutlich höheren Bildpunktauflösung üblicher TV-Kameras identifizieren. In anderen Fällen, in denen die Auflösung des Laserradars 13a ausreichend ist, kann es trotzdem vorteilhaft sein, nur einen Teil des Objektes mit dem Laserradar 13a zu identifizieren und seine Entfernung zu bestimmen und anschließend zur 2D-Bildkorrelation überzugehen.

Bei diesem Prozeß richtet die Steuereinheit 18 die 2D-Sensorik 11a über die Plattform 20 auf das mit dem Laserradar LR ausgewählte Objekt 100 gegebenenfalls nach und steuert das Zoomobjektiv 12 der CCD-Kamera 11 gemäß der gemessenen Objektentfernung so, daß es scharf gestellt ist und die Kameravergrößerung exakt dem einzigen bzw. einem von wenigen im Referenzspeicher 15a verfügbaren zweidimensionalen Referenzbildern der vorliegenden Ansicht (Aspektwinkel des Objektes) entspricht. Jeweils ein Referenzbild pro Aspektwinkel genügt dabei dann, wenn der Einstellbereich des Zoomobjektivs 12 genügend groß ist, um ein Objekt bei allen vorkommenden Entfernungen in der richtigen Vergrößerung abzubilden. Bei diesem Vorgehen entfallen also wegen der vorbekannten und abgeglichenen Vergrößerung zeitraubende Maßstabstransformationen. Wegen der vorbekannten und abgeglichenen Objektrichtung, d.h. Objektlage im 2D-Bild reduziert sich ebenso erheblich der Suchbereich, über welchen die Korrelationsrechnung durchgeführt werden muß. Gleichzeitig wird - insbesondere bei CCD-Kameras mit wenigen Bildelementen - das Korrelationsmaximum höher als beim bisherigen Stand der Technik.

Weiterhin sieht die beschriebene Ausführungsform vor, daß die 2D-Sensorik 11a über die $\theta$, $\phi$-Plattform 20 und die Einheiten 21, 22 derart nachgesteuert wird, daß die Blickrichtung derart ist, daß die Objektkonturen optimal mit dem Bildpunktraster der CCD-Kamera 11 übereinstimmen. Dadurch wird das Korrelationsmaximum weiter erhöht.

Eine weitere Erhöhung des Korrelationsmaximums wird schließlich noch durch eine geschickte Wahl der Referenzbilder erreicht. Die von Roboteranlagen manipulierten Objekte haben zumeist geometrisch einfache Formen mit oft geraden und aufeinander senkrecht stehenden Kanten. Es wird daher vorgeschlagen, diese Eigenschaft auszunutzen und den Maßstab des Referenzbildes so zu wählen, daß die Objektkanten optimal mit dem Raster des Referenzbildspeichers übereinstimmen. Für den Fall, daß zwei oder mehrere Vergrößerungen der möglichen Ansichten des Referenzobjektes gespeichert werden müssen, d.h. wenn der Zoombereich nicht ausreicht, wird weiterhin vorgeschlagen, daß diese Vergrößerungen jeweils im Verhältnis 2:1 zueinander stehen, so daß die Objektkanten weiterhin optimal mit dem Raster des Referenzbildspeichers übereinstimmen.

Es darf daher festgestellt werden, daß erheblich weniger Bildpunkte ausreichen, um ein mit dem Stand der Technik gleichhohes Korrelationsmaximum und damit eine zuverlässige Mustererkennung zu erreichen, also nur ein relativ grobes Raster für die 2D-Bildaufnahme und die Speicherung erforderlich ist. Dies erlaubt einmal die Verwendung einfacherer Kamerasensoren und gestattet eine noch schnellere Bildverarbeitung.

Aus dem Blockschaltbild der Zeichnung dürfte leicht verständlich der Zusammenhang und der Funktionsablauf der die Informationen aufnehmenden und auswertenden Bildaufnahme- und -verarbeitungsanlage 10 dargestellt und entnehmbar sein. Hieraus geht nocheinmal hervor, daß Richtung und Gesichtsfeld des Laserradars LR mittels der Plattform 20 und der Ablenkeinheit 14 nach Maßgabe der Programmeinheit 19 und gegebenenfalls einer vorläufigen, stark vereinfachten Bildverarbeitung eingestellt werden, und daß das Zoomobjektiv 12 in Entfernung und Brennweite nach Maßgabe des Laserradars LR und der 3D-Bildkorrelation eingestellt wird. Zur Mustererkennung wird in dem 3D-Bildkorrelator 16 eine Korrelation zwischen dem dreidimensionalen Bild des Laserradars LR und den im 3D-Referenzbildspeicher 16a gespeicherten dreidimensionalen Referenzbildern des Objekts 100 in den verschiedenen vorkommenden Ansichten durchgeführt. Das gleiche geschieht mit dem zweidimensionalen Bild in den Einheiten 15 und 15a. Die Vergrößerung des Zoomobjektivs 12 ist so gewählt, und die Plattform 20 ist nach der 3D-Bildkorrelation derart nachgesteuert, daß die Objektkonturen optimal mit dem Bildpunktraster der CCD-Kamera 11 übereinstimmen.

Erwähnt soll noch werden, daß für sogenannte einfache Roboteranlagen bzw. deren Manipulatoren es möglich ist, daß anstelle des Laserradars nur ein einfacher Laserentfernungsmesser ohne Zuordnung einer Ablenkeinheit und der Einrichtungen 16a, 16b zur 3D-Bildkorrelation vorgesehen werden kann, anstelle der Identifizierung und Lokalisierung eines Objekts durch die 3D-Bildkorrelation wird dann nur eine einfache Entfernungsmessung zu einem Punkt des vermuteten Objekts durchgeführt. Zoomobjektiv und Blickrichtung der CCD-Kamera können dann nur ungefähr eingestellt werden, so daß Korrelationsrechnungen in einem gewissen Bereich von Vergrößerung und Lage der Referenzbilder im Vergleich zum Bild der CCD-Kamera erforderlich werden. Eine derartig vereinfachte Anlage kann in einfachen Anwendungsfällen vorteilhaft sein.

**Patentansprüche**

1. Roboteranlage mit einem oder mehreren beweglichen Manipulatorarmen und einer Sensorik zur Lage- und Bewegungskontrolle sowie Sensoren zur zweidimensionalen Mustererkennung und zugeordneter Steuer- und Auswertelektronik, wobei der Roboteranlage eine Bildaufnahme- und -verarbeitungsanlage aus 2D- und 3D-Sensoriken sowie einer Auswerte- und Steueranlage zugeordnet sind, **dadurch gekennzeichnet,** daß der oder die Manipulatorarme (6) der Roboteranlage (5) in flexibler Leichtbauweise ausgeführt sind und mit einer einfachen Sensorik (7) zur Lage- und Bewegungskontrolle versehen sind und von einer Bildaufnahme- und Bildverarbeitungsanlage (10) gesteuert werden, deren 2D-Sensorik (11a) eine CCD-Kamera (11) mit einer steuerbaren Zoomoptik (12) ist und deren 3D-Sensorik (13a) als ein aus einem Laserentfernungsmesser LEM (13) und einer Ablenkeinheit (14) bestehendes Laserradar LR ausgebildet ist, wobei beide Sensoriken (11a, 13a) auf einer steuerbaren Plattform (20) angeordnet sind, daß ferner ein Objekt (100) zunächst durch Mustererkennung mittels des Laserradars LR und 3D-Bildkorrelation lokalisiert wird, und daß gemäß dieser Information eine mit diesen Baugruppen verbundene Steuereinheit (18) die Entfernungseinstellung und Brennweite des Zoom-Objektivs (12) sowie die Richtung der Plattform (20) derart steuert, daß bei der verwendeten CCD-Kamera (11) die Bildgröße des zuvor mit dem Laserradar LR vermessenen Objekts (100) genau der Größe der einzigen bzw. eines von wenigen Referenzbildern des 2D-Referenzbildspeichers (15a) pro vorkommendem Aspektwinkel des Objektes (100) entspricht.

2. Roboteranlage nach Anspruch 1, **dadurch gekennzeichnet,** daß Richtung und Gesichtsfeld des Laserradars (LR) mittels Plattform (20) mit Antriebseinheiten (21, 22) und Ablenkeinheit (14) nach Maßgabe der Programmeinheit (19) und gegebenenfalls einer vorläufigen, stark vereinfachten Bildverarbeitung der Auswerte- und Steueranlage (19a) eingestellt werden.

3. Roboteranlage nach den Ansprüchen 1 oder 2, **dadurch gekennzeichnet,** daß zur Mustererkennung des Objekts (100) zusätzlich eine Korrelation im 3D-Bildkorrelator (16) zwischen dem dreidimensionalen Bild des Laserradars (LR) und dem dreidimensionalen Referenzbild im 3D-Referenzbildspeicher (16a) durchgeführt wird.

4. Roboteranlage nach den Ansprüchen 1 oder 3, **dadurch gekennzeichnet,** daß die Plattform (20) nach der ersten 3D-Bildkorrelation derart nachgesteuert wird, daß die Objektkonturen in der CCD-Kamera (11) optimal mit ihrem Bildpunktraster übereinstimmen.

5. Roboteranlage nach den Ansrpüchen 1 bis 4, **dadurch gekennzeichnet,** daß die Entfernungsscharfeinstellung des Zoomobjektivs (12) nach Maßgabe der 3D-Bildkorrelation bzw. der gemessenen Entfernung des Objekts (100) durchgeführt wird.

6. Roboteranlage nach den Ansprüchen 1 bis 5, **dadurch gekennzeichnet,** daß der Maßstab der zweidimensionalen Referenzbilder so gewählt ist, daß die Konturen des Referenzobjektes optimal mit dem Bildpunktraster des 2D-Referenzbildspeichers (15a) übereinstimmen.

7. Roboteranlage nach einem oder mehreren der Ansprüche 1 bis 6, **dadurch gekennzeichnet,** daß das Laserradar (LR) durch ein Laserentfernungsmeßgerät (13) ohne Ablenkeinheit (14) ersetzt wird.

**Claims**

1. Robot installation with one or more movable manipulator arms and a sensory system for position and movement control, as well as sensors for two-dimensional sample recognition and associated control and evaluation electronics, there being associated with the robot installation an image recording and processing installation formed of 2D and 3D sensory systems as well as an evaluation and control installation, characterized in that the manipulator arm or arms (6) of the robot installation (7) are produced in a flexible light manner of construction and are provided with a simple sensory system (7) for position and movement control, and are controlled by an image recording and processing installation (10), the 2D sensory sytem (11a) of which is a CCD camera (11) with controllable zoom optics (12), and the 3D sensory system (13a) of which is designed as a laser radar LR consisting of a laser telemeter LEM (13) and a deflection unit (14), the two sensory systems (11a, 13a) being mounted on a controllable platform (20), in that, furthermore, an object (100) is first of all located by sample recognition by means of the laser radar LR and 3D image correlation, and in that on the basis of this information a control unit (18) connected with these building units controls the distance setting and the focal distance of the zoom lens (12) as well as the direction of the platform (20) in such a manner that, in the CCD camera (11) the image size of the object (100) previously measured with the laser radar LR corresponds exactly with the size of the sole, or of one aspect angle of the object (100) originating from few reference images of the 2D reference image store (15a).

2. Robot installation according to claim 1, characterized in that the direction and the field of view of the laser radar (LR) are set by means of the platform (20) with drive units (21, 22) and deflection unit (14) depending on the programming unit (19) and possibly a preliminary considerably simplified image processing of the evaluation and control installation (19a).

3. Robot installation according to claim 1 or 2, characterized in that, for the sample recognition of the object (100), there is additionally carried out a correlation of the 3D image correlator (16) between the three-dimensional image of the laser radar (LR) and the three-dimensional reference image in the 3D reference image store (16a).

4. Robot installation according to claims 1 or 3, characterized in that the platform (20) after the first 3D image correlation is subsequently controlled in such a manner that the object outlines in the CCD camera (11) agree optimally with their image spot raster.

5. Robot installation according to claims 1 to 4, characterized in that the distance sharp setting of the zoom lens (12) is carried out on the basis of the 3D image correlation or of the measured distance of the object (100).

6. Robot installation according to claims 1 to 5, characterized in that the scale of the two-dimensional reference images is selected in such a manner that the outlines of the reference object agree optimally with the image spot raster of the 2D reference image store (15a).

7. Robot installation according to one or more of claims 1 to 6, characterized in that the laser radar (LR) is replaced by a laser telemeter (13) without deflection unit (14)

**Revendications**

1. Robot équipé d'un ou plusieurs bras de manipulation mobiles et d'un système de détection pour le contrôle de position et de mouvement, ainsi que de détecteurs pour la reconnaissance de forme bidimensionnelle et de l'électronique correspondante de commande et de puissance, ledit robot comprenant un dispositif de prises de vue et de traitement d'images comportant des systèmes de détection à deux et à trois dimensions ainsi qu'un dispositif de commande et de puissance, caractérisé en ce que le ou les bras de manipulation (6) du robot (5) sont réalisés sous forme de construction légère flexible et sont pourvus d'un système de détection simple (7) pour le contrôle de position et de mouvement et sont commandés par un dispositif de prises de vue et de traitement d'images (10) dont le système de détection à deux dimensions (11a) est constitué d'une caméra CCD (11) avec un zoom actionnable (12) et dont le système de détection à trois dimensions (13a) est constitué par un radar laser LR comprenant un dispositif de mesure de distance laser LEM (13) et une unité de déflexion (14), les deux systèmes de détection à deux et à trois dimensions précités (11a, 13a) étant disposés sur une plate-forme actionnable (20), en ce qu' en outre un objet (100) est localisé, pour la reconnaissance de forme par l'intermédiaire du radar laser LR et d'un corrélateur d'images à trois dimensions (16), et en ce que, selon cette information, une unité de commande (18), reliée à ces groupes fonctionnels, commande le réglage de la distance et de la longueur focale du zoom (12) ainsi que l'orientation de la plate-forme (20), de telle manière que, avec la caméra CCD utilisée (11), la grandeur de l'image de l'objet (100) mesuré préalablement avec le radar laser LR correspond exactement à la grandeur des images de référence individuelles ou de quelques unes des images de référence de la mémoire (15a) d'images de référence à deux dimensions pour chaque angle de vision de l'objet (100).

2. Robot selon la revendication 1, caractérisé en ce que l'orientation et le champ de vue du radar laser (LR) sont réglés à l'aide de la plate-forme (20) équipée d'unités d'actionnement (21, 22) et à l'aide de l'unité de déflexion (14) en fonction de l'unité de programmation (19) et, le cas échéant, d'un traitement d'images transitoire, fort simplifié, du dispositif de commande et de puissance (19a).

3. Robot selon la revendication 1 ou 2, caractérisé en ce que, pour la reconnaissance de forme de l'objet (100), dans le corrélateur d'images à trois dimensions (16), est effectuée additionnellement une corrélation entre l'image tri-dimensionnelle du radar laser (LR) et l'image de référence tri-dimensionnelle dans la mémoire (16a) d'images de référence à trois dimensions.

4. Robot selon la revendication 1 ou 3, caractérisé en ce que la plate-forme (20) est commandée ensuite, après la première corrélation d'images à trois dimensions, de manière telle que les contours de l'objet correspondent de façon optimale à leur trame de points d'images dans la caméra CCD (11).

5. Robot selon les revendications 1 à 4, caractérisé en ce que le réglage précis de la distance du zoom (12) est effectué en fonction de la corrélation à trois dimensions ou de la distance mesurée de l'objet (100).

6. Robot selon les revendications 1 à 5, caractérisé en ce que l'échelle des images de référence bi-dimensionnelles est choisie de telle sorte que les contours de l'objet de référence correspondent de façon optimale à la trame de points d'images de la mémoire d'images de référence à deux dimensions (15a).

7. Robot selon l'une quelconque des revendications 1 à 6 ou plusieurs d'entre elles, caractérisé en ce que le radar laser (LR) est remplacé par un dispositif de mesure de distance laser (13) sans unité de déflexion (14).

FIG. 1

FIG. 2